# EUROPEAN PATENT APPLICATION

(11) **EP 4 717 459 A1**
(43) Date of publication of application: **01.04.2026**
(21) Application number: 25200052.6
(22) Date of filing: 03.09.2025
(51) Int. Cl.: B41J 2/14, B41J 2/175, B41J 2/18

(54) **LIQUID EJECTION HEAD, LIQUID EJECTION DEVICE, AND IMAGE FORMING APPARATUS**

(30) Priority: 30.09.2024 JP 2024169952
(71) Applicant: RISO Technologies Corporation, Tokyo 108-8385 (JP)
(72) Inventor: Nitta, Noburu, Mishima Shizuoka, 411-0842 (JP)
(74) Representative: Bandpay & Greuter

(57) **Abstract**

A liquid ejection head includes pressure chambers (42) arranged in a first direction and respectively communicating with nozzles, each pressure chamber for storing liquid, pairs of upstream and downstream flow paths (43, 46), each pair communicating with a pressure chamber, the upstream and downstream flow paths of each pair being connected to first and second ends of the corresponding pressure chamber, an upstream common chamber (44) communicating with the upstream flow paths, a downstream common chamber (47) communicating with the downstream flow paths, a bypass flow path (49) communicating with the upstream common chamber at an end of the upstream common chamber in the first direction and the downstream common chamber at an end of the downstream common chamber in the first direction, and a pressure damper (8) provided in the bypass flow path.

## Description

### FIELD

Embodiments described herein relate generally to a liquid ejection head, a liquid ejection device, and an image forming apparatus.

### BACKGROUND

A liquid ejection head that supplies a predetermined amount of liquid to a predetermined position is known. The liquid ejection head is mounted on, for example, an ink jet printer, a 3D printer, or a dispensing device. The ink jet printer ejects droplets of ink from an ink jet head to form an image or the like on the surface of a recording medium. The 3D printer ejects droplets of a shaping material from a shaping material ejection head and cures the droplets to form a three-dimensional shaped object. The dispensing device ejects droplets of a sample and supplies a predetermined amount of the droplets to a plurality of containers or the like.

The liquid ejection head includes a plurality of channels for ejecting liquid. Each channel includes a nozzle that ejects the liquid, a pressure chamber that communicates with the nozzle, and an actuator that changes the volume of the pressure chamber. The liquid ejection head selects one or more channels for ejecting the liquid from the plurality of channels, and applies a drive voltage to the actuator of the selected channel to eject the liquid.

In the liquid ejection head, meniscus vibration determined by the surface tension of the liquid in the nozzle and the mass of the liquid remains after ejection. In a high-speed liquid ejection head, the vibration needs to be suppressed quickly, so resistance flow paths are provided upstream and downstream of the pressure chamber. However, in a liquid circulation type head, these resistance flow paths hinder circulation of the liquid. In particular, in a multi-nozzle head having a plurality of channels, if the ratios of upstream and downstream resistance differ among the channels, pressure differences arise and print quality deteriorates. In addition, the meniscus easily spills out of a channel having a small upstream flow path resistance, and air is easily mixed in a channel having a small downstream flow path resistance. Thus, it is necessary to reduce a circulation flow rate, but when the circulation flow rate is less than the liquid ejection flow rate, the liquid is drawn from the downstream side to the pressure chamber at the time of maximum liquid ejection. Then, old, contaminated liquid that flowed downstream returns to the pressure chamber.

### DISCLOSURE OF THE INVENTION

To this end, the present invention aims at providing a liquid ejection head, a liquid ejection device, and an image forming apparatus capable of stably ejecting a liquid in a liquid circulation type is provided. The present invention provides a liquid ejection head, a liquid ejection device, and an image forming apparatus according to appended claims.

### BRIEF DESCRIPTION OF THE DRAWINGS

FIG. 1 is an overall configuration diagram of an ink jet printer including ink jet heads according to a first embodiment.
FIG. 2 is a perspective view of the ink jet head.
FIG. 3 is a partially enlarged cross-sectional view of a head unit of the ink jet head.
FIG. 4 is a partially enlarged cross-sectional view of the head unit.
FIG. 5A is a partially enlarged perspective view of the head unit.
FIG. 5B is a partially enlarged cross-sectional view of the head unit.
FIG. 5C is a partially enlarged cross-sectional view of the head unit.
FIG. 6 is an overall configuration diagram of an ink circulation device of the ink jet head.
FIG. 7 shows a drive circuit for driving the ink jet head unit.
FIG. 8 shows a drive waveform applied to a piezoelectric actuator in the ink jet head unit.
FIG. 9 shows diagrams illustrating operations of the piezoelectric actuator to which the drive waveform is applied.
FIG. 10A shows a partially enlarged perspective view of a head unit of an ink jet head according to a second embodiment.
FIG. 10B shows a partially enlarged sectional view of the head unit of the ink jet head according to the second embodiment.
FIGS. 11A to 11C show a modification to the ink jet head according to the second embodiment.
FIG. 12A shows a partially enlarged perspective view of a head unit of an ink jet head according to a third embodiment.
FIG. 12B shows a partially enlarged sectional view of the head unit of the ink jet head according to the third embodiment.
FIG. 13 shows a modification to the ink jet head according to the third embodiment.

### DETAILED DESCRIPTION

A liquid ejection head, a liquid ejection device, and an image forming apparatus capable of stably ejecting a liquid in a liquid circulation type is provided.

In general, according to an embodiment, a liquid ejection head comprises a plurality of pressure chambers arranged in a first direction and respectively communicating with nozzles, each pressure chamber capable of storing liquid, a plurality of pairs of upstream and downstream flow paths, each pair communicating with a corresponding one of the pressure chambers, the upstream flow path of each pair being connected to a first end of the corresponding pressure chamber, and the downstream flow path of said each pair being connected to a second end of the corresponding pressure chamber, an upstream common chamber communicating with the upstream flow paths, an upstream port communicating with the upstream common chamber at a first end of the upstream common chamber in the first direction, a downstream common chamber communicating with the downstream flow paths, a downstream port communicating with the downstream common chamber at a first end of the downstream common chamber in the first direction, a bypass flow path communicating with the upstream common chamber at a second end of the upstream common chamber in the first direction and the downstream common chamber at a second end of the downstream common chamber in the first direction, and a pressure damper provided along the bypass flow path.

As described above, the pressure chamber extends perpendicularly to the nozzle array direction, with the second end opposite the first end. However, this is not strictly necessary. For example, the upstream flow path, the pressure chamber, and the downstream flow path can form a folded flow path (ex. WO2016111147). Alternatively, the pressure chamber can extend in the nozzle array direction (ex. JP2008-254196).

Hereinafter, embodiments of this disclosure will be described in detail with reference to the accompanying drawings. In the drawings, the same components are denoted by the same reference numerals.

### First Embodiment

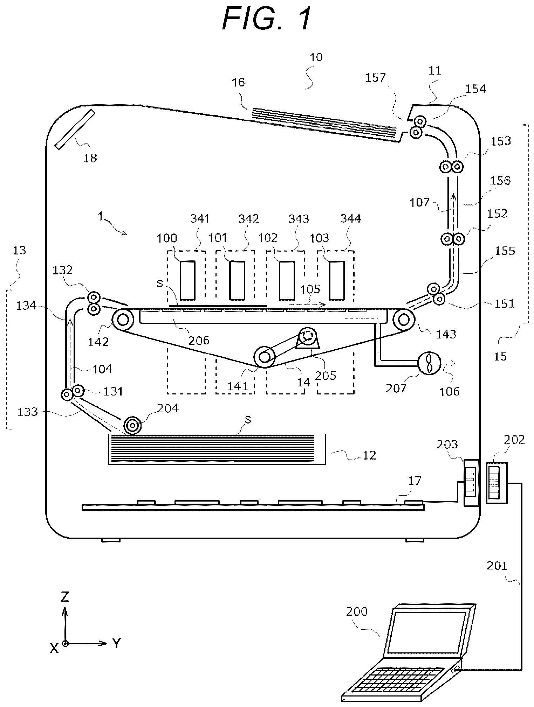

An ink jet printer 10 that prints an image on a recording medium will be described as an example of an image forming apparatus on which a liquid ejection head according to a first embodiment is mounted. FIG. 1 shows a schematic configuration of the ink jet printer 10. In the ink jet printer 10, a cassette 12 which accommodates a sheet S which is an example of the recording medium, an upstream conveyance path 13 for the sheet S, a conveyance belt 14 which conveys the sheet S taken out of the cassette 12, a plurality of ink jet heads 100 to 103 which eject droplets of ink toward the sheet S on the conveyance belt 14, a downstream conveyance path 15 for the sheet S, a discharge tray 16, and a control board 17 are disposed inside a housing 11. An operation unit 18, which is a user interface, is disposed on an upper side of the housing 11.

Image data to be printed on the sheet S is generated by, for example, a computer 200 which is an externally connected device. The image data generated by the computer 200 is sent to the control board 17 of the ink jet printer 10 through a cable 201 and connectors 202 and 203.

A pickup roller 204 supplies the sheets S one by one from the cassette 12 to the upstream conveyance path 13. The upstream conveyance path 13 includes feed roller pairs 131 and 132 and sheet guide plates 133 and 134. The sheet S is fed to an upper surface of the conveyance belt 14 via the upstream conveyance path 13. An arrow 104 in FIG. 1 indicates a conveyance path of the sheet S from the cassette 12 to the conveyance belt 14.

The conveyance belt 14 is a mesh-shaped endless belt having a large number of through holes formed in a surface thereof. Three rollers including a drive roller 141 and driven rollers 142 and 143 rotatably support the conveyance belt 14. A motor 205 rotates the conveyance belt 14 by rotating the drive roller 141. An arrow 105 in FIG. 1 denotes a rotation direction of the conveyance belt 14. A negative pressure container 206 is disposed on a back surface side of the conveyance belt 14. The negative pressure container 206 is connected to a pressure reducing fan 207. The fan 207 creates a negative pressure inside the negative pressure container 206 by forming an airflow, and causes the sheet S to be adsorbed and held on the upper surface of the conveyance belt 14. An arrow 106 in FIG. 1 denotes a flow of the airflow.

The ink jet heads 100 to 103 as an example of the liquid ejection head are disposed so as to face the sheet S adsorbed and held on the conveyance belt 14 with a slight gap of, for example, 1 mm therebetween. The ink jet heads 100 to 103 separately eject droplets of ink toward the sheet S. The ink jet heads 100 to 103 print an image when the sheet S passes therebelow. The ink jet heads 100 to 103 have the same structure except for different colors of the ink to be ejected. The colors of the ink are, for example, cyan, magenta, yellow, and black.

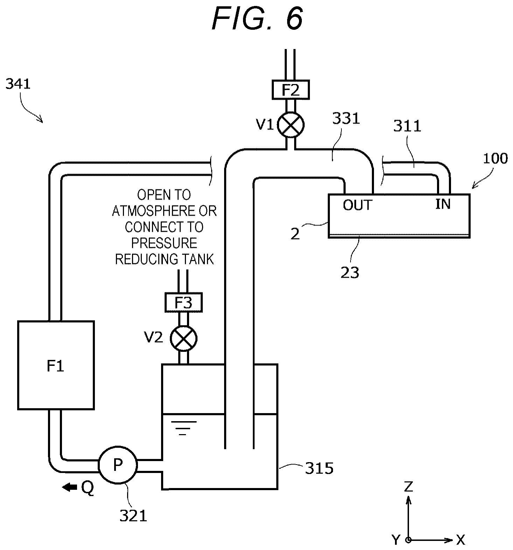

The ink is supplied to the ink jet heads 100 to 103 by respective ink circulation devices 341 to 344 circulating and supplying ink. A detailed structure of the ink circulation devices 341 to 344 will be described later (see FIG. 6). In FIG. 1, for convenience of drawing, the ink circulation devices 341 to 344 are shown by respective broken line frames.

After the image formation, the sheet S is fed from the conveyance belt 14 to the downstream conveyance path 15. The downstream conveyance path 15 includes feed roller pairs 151, 152, 153, and 154 and sheet guide plates 155 and 156 that form a conveyance path for the sheet S. The sheet S is fed through a discharge port 157 to the discharge tray 16 via the downstream conveyance path 15. An arrow 107 in FIG. 1 indicates the conveyance path for the sheet S.

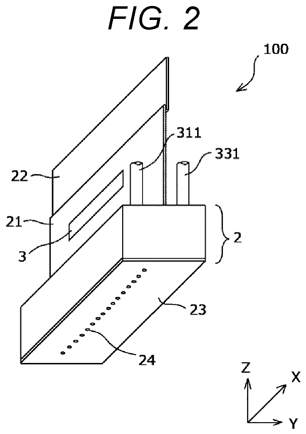

Next, a structure of the ink jet heads 100 to 103 will be described. Hereinafter, the ink jet head 100 will be described with reference to FIGS. 2 to 5, and the ink jet heads 101 to 103 also have the same structure as the ink jet head 100.

As shown in FIG. 2, the ink jet head 100 includes a head unit 2 as an example of a liquid ejection unit. The head unit 2 is connected to a flexible printed interconnect board 21 which is an example of a film wiring board. The flexible printed wiring board 21 is connected to a printed board 22, which is an example of a relay board. The head unit 2 includes a nozzle plate 23 which is an example of a nozzle portion. The ink circulation type head unit 2 is connected to the ink circulation device 341 via an ink supply path 311 and an ink discharge path 331.

Nozzles 24 for ejecting ink are arranged along a first direction of the nozzle plate 23, for example, an X direction as illustrated in the drawings. A nozzle density is set within a range of, for example, 150 dpi to 1,200 dpi. The nozzles 24 are not limited to being arranged in one row, but may be arranged in a plurality of rows. A detailed structure of the head unit 2 will be described later.

The flexible printed wiring board 21 is formed using a synthetic resin film such as a polyimide. A drive integrated circuit (IC) 3 (hereinafter, referred to as a drive IC), which is a driver chip, is mounted on the flexible printed wiring board 21. The printed board 22 is a hard through-hole board in which an epoxy resin layer containing glass fibers and a copper wiring layer are stacked in multiple layers. The drive IC 3 serving as a control unit of the ink jet head 100 temporarily stores print data transmitted from the control board 17, including a central processing unit (CPU) serving as a control unit of the ink jet printer 10, via the printed board 22, and applies a drive signal to each channel so as to eject ink at a predetermined timing.

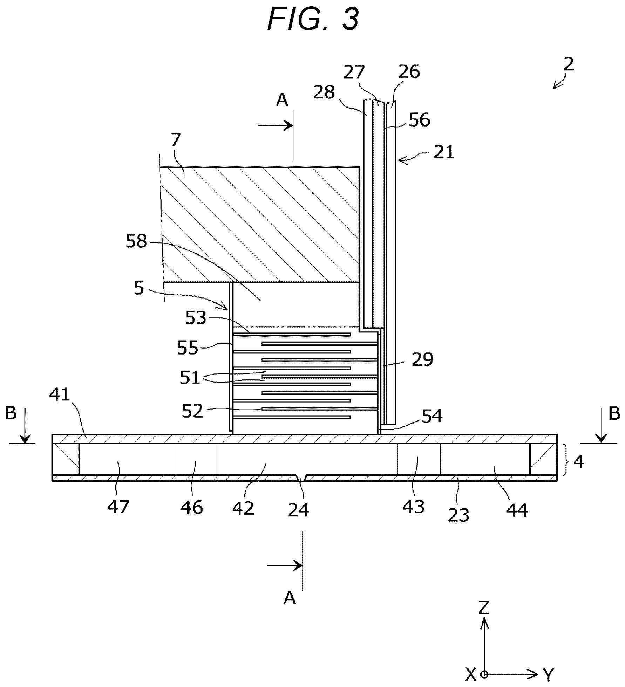

FIGS. 3, 4 and 5A to 5C are partial cross-sectional views of the head unit 2. The nozzle plate 23 is bonded to one surface of a pressure chamber board 4. The nozzle plate 23 is a rectangular plate formed of a resin such as a polyimide or a metal such as stainless steel. A diaphragm 41 is bonded to one surface of the pressure chamber board 4 on a side opposite to the nozzle plate 23. The diaphragm 41 has flexibility to be deformed when an external force is applied. The diaphragm 41 is a rectangular plate formed of, for example, a flexible polyimide film or metal.

A pressure chamber 42 is formed in the pressure chamber board 4. A plurality of pressure chambers 42 are arranged corresponding to the respective nozzles 24 and separately communicate with those nozzles 24. The pressure chamber 42 is formed by, for example, forming a rectangular opening along a second direction, for example, a Z direction, in the pressure chamber board 4 and closing openings on both sides in the Z direction with the nozzle plate 23 and the diaphragm 41, thereby forming a space to be filled with ink. The pressure chamber 42 is formed in a groove shape along a third direction, for example, a Y direction.

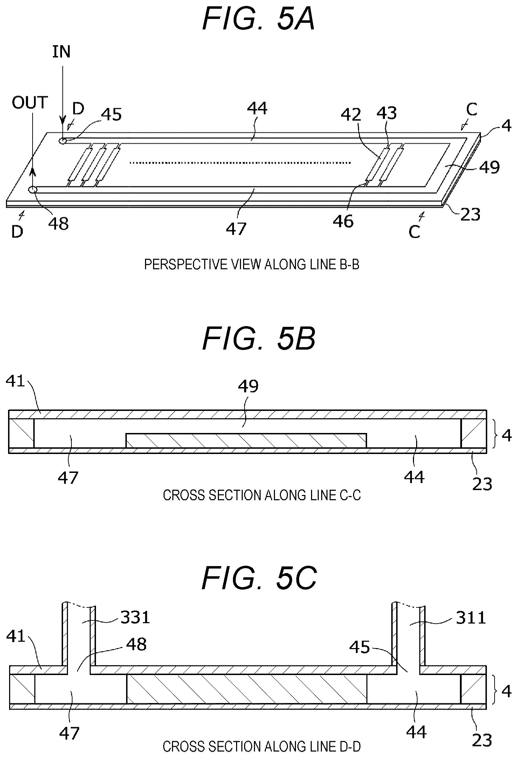

In particular, as shown in FIGS. 5A to 5C, in the ink circulation type head, upstream ends of the pressure chambers 42 in the Y direction communicate with an upstream common liquid chamber 44 via upstream resistance flow paths 43 (upstream flow paths). The upstream common liquid chamber 44 is formed in a groove shape along an arrangement direction (i.e., X direction) of the pressure chambers 42, and the upstream resistance flow paths 43 are connected to a side surface side thereof. The upstream common liquid chamber 44 is an ink supply manifold that supplies ink to the pressure chambers 42 via the upstream resistance flow paths 43. The upstream common liquid chamber 44 is formed by, for example, forming an opening along, for example, the Z direction, in the pressure chamber board 4 and closing openings on both sides in the Z direction with the nozzle plate 23 and the diaphragm 41, thereby forming a space through which ink flows. An upstream ink port 45 (upstream port) that supplies ink to the upstream common liquid chamber 44 is provided on one side in the arrangement direction of the plurality of pressure chambers 42, that is, on one end side in the X direction in the shown example. The upstream ink port 45 is connected to the ink supply path 311 (see FIG. 2). The upstream ink port 45 is an example of an upstream liquid port.

The other, downstream ends of the pressure chambers 42 in the Y direction communicate with a downstream common liquid chamber 47 via downstream resistance flow paths 46 (downstream flow paths). The downstream common liquid chamber 47 is formed in a groove shape along the arrangement direction (i.e., the X direction) of the pressure chambers 42, and the downstream resistance flow paths 46 are connected to a side surface side thereof. The downstream common liquid chamber 47 is an ink discharge manifold through which the ink discharged from the pressure chambers 42 via the downstream resistance flow paths 46 flows in common. The downstream common liquid chamber 47 is formed by, for example, forming an opening along, for example, the Z direction, in the pressure chamber board 4 and closing openings on both sides in the Z direction with the nozzle plate 23 and the diaphragm 41, thereby forming a space through which ink flows. A downstream ink port 48 (downstream port) that discharges the ink from the downstream common liquid chamber 47 out of the head unit 2 is provided on the same end side in the X direction as the upstream ink port 45. The downstream ink port 48 is connected to the ink discharge path 331 (see FIG. 2). The downstream ink port 48 is an example of a downstream liquid port.

The upstream resistance flow path 43 and the downstream resistance flow path 46 are each formed, for example, to be narrower than a width of the pressure chamber 42 in the X direction, thereby reducing a flow path cross section and having a flow path resistance. The upstream resistance flow path 43 and the downstream resistance flow path 46 may each be narrower than a width in the Z direction or be narrower than both the widths in the X direction and the Z direction, instead of being narrower than the width in the X direction. For example, the upstream resistance flow path 43 and the downstream resistance flow path 46 are each formed along a center axis of the pressure chamber 42 in the Y direction, but are not limited thereto. That is, in the upstream resistance flow path 43 and the downstream resistance flow path 46, it is sufficient that a flow path cross section for the ink is smaller than a flow path cross section of the pressure chamber 42. Therefore, shapes of the flow path cross sections of the upstream resistance flow path 43 and the downstream resistance flow path 46 are not limited to a rectangle. For example, the upstream resistance flow paths 43 have the same shape in the channels, but are not limited thereto. The downstream resistance flow paths 46 also have the same shape in the channels, but are not limited thereto. The upstream resistance flow path 43 and the downstream resistance flow path 46 are each symmetrical in the Y direction via the pressure chamber 42, but are not limited thereto. However, in order to prevent an occurrence of a pressure difference between the channels, the resistance flow paths 43 and 46 in the channels are formed so as to have the same upstream and downstream resistance ratio.

A bypass flow path 49 is provided on one side in the arrangement direction of the plurality of pressure chambers 42, that is, on the other end side in the X direction in the shown example. That is, it is disposed on a side opposite to the upstream ink port 45 and the downstream ink port 48. The bypass flow path 49 is a flow path that connects the other ends of the upstream common liquid chamber 44 and the downstream common liquid chamber 47 to bypass the ink.

The bypass flow path 49 is formed to have a flow path cross section smaller than those of the upstream common liquid chamber 44 and the downstream common liquid chamber 47 to have a flow path resistance. For example, a flat shape having a small width in the Z direction and a large width in the X direction is formed. Accordingly, a circulation flow of the ink can be formed not only in the bypass flow path 49 but also in a flow for supplying the ink into the pressure chambers 42. A ratio of a total flow rate of the ink flowing through the pressure chambers 42 and a flow rate of the ink flowing through the bypass flow path 49 can be adjusted based on the flow path resistance of the bypass flow path 49. For example, when a length of the bypass flow path 49 is constant, if a cross-sectional area of the bypass flow path 49 is increased, more ink flows through the bypass flow path 49, and if the cross-sectional area of the bypass flow path 49 is decreased, more ink flows through the pressure chambers 42. At this time, the flow rate of the ink flowing through the pressure chambers 42 is adjusted to be smaller than a flow rate of the ink ejected from the nozzles 24. For example, the flow rate of the ink supplied into the pressure chambers 42 is 0.6 times the flow rate of the ink ejected from the nozzles 24. A shortage is drawn from the downstream common liquid chamber 47 as described later.

In order to compensate for the shortage from the downstream common liquid chamber 47, when the flow rate of the ink being ejected is sufficiently low, a total flow rate of the ink flowing through the bypass flow path 49 and the ink flowing through flow paths of the channels from inlets of the upstream resistance flow paths 43 to outlets of the downstream resistance flow paths 46 is set to be equal to or greater than a total maximum ejection flow rate of the ink ejected from the nozzles 24. This flow rate setting is performed by, for example, the ink circulation device 341. The maximum ink ejection flow rate is a total flow rate when the ink is ejected from all the ejection channels. In one embodiment, the flow rate of the ink being ejected is low enough that the flow rate of ink entering from the ink supply path 311 via the upstream ink port 45 is substantially equal to the flow rate of ink exiting to the ink discharge path 331 via the downstream ink port 48.

A circulation flow rate of the ink is greater than or equal to a maximum total ejection flow rate of the liquid ejected from the nozzles. The circulation flow rate is the flow rate through the upstream and downstream flow paths under a condition where the flow rate of liquid entering from the upstream ink port 45 can be considered substantially equal to the flow rate of liquid exiting through the downstream ink port 48. The maximum total ejection flow rate is a flow rate at a full duty with all nozzles ejecting. The state "a flow rate of the liquid being ejected is low enough" is defined as the state in which "the circulation flow rate is the flow rate through the upstream and downstream flow paths under a condition where the flow rate of liquid entering from the upstream ink port 45 can be considered substantially equal to the flow rate of liquid exiting through the downstream ink port 48."

For example, when a circulation flow rate of the ink flowing through the pressure chambers 42 is set to 0.6 times the ejection flow rate as described above, the flow path resistance of the bypass flow path 49 is set to (6/4) times a parallel resistance of flow path resistances of all the flow paths passing through the pressure chamber 42 such that 0.4 times of the ejection flow rate flows through the bypass flow path 49. This setting is performed, for example, by adjusting the cross-sectional area of the bypass flow path 49. Then, if the ink is circulated from the upstream ink port 45 toward the downstream ink port 48 at, for example, the total maximum ejection flow rate, the circulation flow rate while the ink is not ejected is in a ratio of 6:4 between a circulation path passing through the pressure chambers 42 and the bypass flow path 49. At the maximum ejection flow rate, the ink flows backward from the downstream common liquid chamber 47 toward the pressure chamber 42, but since a corresponding amount of ink is supplied from the bypass flow path 49 to the downstream common liquid chamber 47, the ink does not flow backward from the downstream ahead of the downstream ink port 48 which may be contaminated with foreign matters or air bubbles.

A relationship between the flow rate of the circulation flow of the ink flowing through the pressure chambers 42, that is, the flow rate of the ink flowing through the pressure chambers 42 when the ink is not ejected from the nozzles 24, and a flow rate of the circulation flow of the ink flowing through the bypass flow path 49 when the ink is not ejected from the nozzles 24, is, for example, the following relationships a) to d), with the maximum ejection flow rate, that is, a total consumption amount of the ink when maximum continuous ejection is performed from all the nozzles 24 being 1.

| | Pressure chamber 42 | Bypass flow path 49 | Total | Ratio |
|---|---|---|---|---|
| a) | 0.6 | 0.4 | 1 | 6:4 |
| b) | 0.6 | 1.4 | 2 | 3:7 |
| c) | 0.2 | 0.8 | 1 | 1:4 |
| d) | 0.2 | 1.8 | 2 | 1:9 |

Since the total flow rates of b) and d) are larger than those of a) and c), b) and d) are advantageous in stabilizing temperature and preventing sedimentation of ink components. Since the total flow rates of a) and c) are smaller than those of b) and d), ink supply is easier in the cases of a) and c). Since the circulation flow rates in the pressure chamber of c) and d) are smaller than those of a) and b), the influence of the flow path resistance on the nozzle back pressure is smaller, and the nozzle back pressure is more easily stabilized in the cases of c) and d). Since the circulation flow rates of the pressure chamber of a) and b) are larger than those of c) and d), it is easier to discharge foreign matters or air bubbles mixed in the pressure chamber 42 toward downstream in the cases of a) and b). Since the ratio of the flow rate of the bypass flow path 49 to the circulation flow rate of the pressure chamber is larger in the order of d), c), b), and a), even when a needle-shaped foreign matter or the like is mixed in the supplied ink, it is difficult to mix the needle-shaped foreign matter or the like into the pressure chambers 42. In all of a), b), c), and d), since the total flow rate exceeds 1, it is possible to prevent the foreign matter in the ink from being drawn into the head unit 2 from the downstream ink port 48 even at the maximum ejection flow rate. As listed in the left column of the table, the circulation flow rate of the pressure chamber 42 is less than 1 for all cases a), b), c), and d). For example, the circulation flow rate of the pressure chamber 42 is 0.6 for a) and b), and 0.2 for c) and d). Therefore, the influence of flow path resistance on nozzle back pressure is small, and ink supply is facilitated. However, care must be taken to prevent foreign matter from being drawn in from the downstream side.

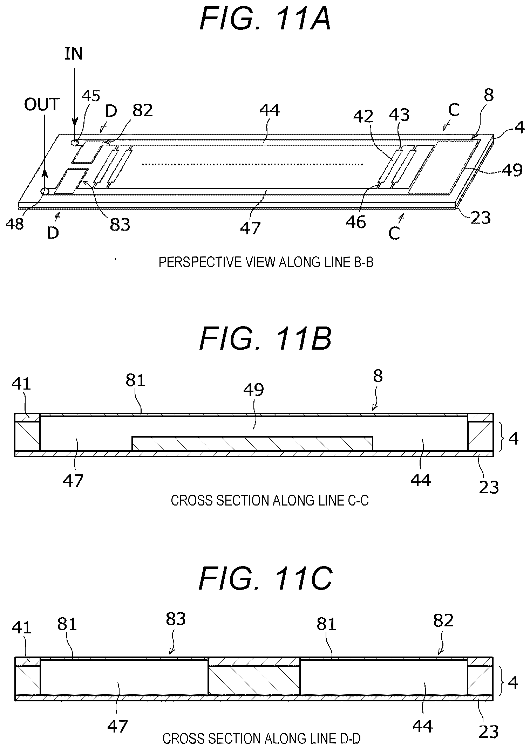

The cross section of the bypass flow path 49 is not limited to a flat shape, and the width in the Z direction and the width in the X direction may be adjusted. That is, it is sufficient that the flow path cross section of the bypass flow path 49 is smaller than the flow path cross sections of the upstream common liquid chamber 44 and the downstream common liquid chamber 47. Therefore, the shape of the flow path cross section of the bypass flow path 49 is not limited to a rectangle. A resistance may be provided in a part of the bypass flow path 49 to adjust the ratio between the flow rate of the bypass flow path 49 and the total flow rate of the pressure chambers 42. In this case, it is desirable to dispose pressure dampers on both sides of the resistance flow path. One of the pressure dampers may be provided near an ink port as shown in FIG. 11A. A configuration of the pressure damper will be described later.

FIG. 6 shows an overall configuration of the ink circulation device 341 that circulates and supplies ink to the ink jet head 100. The ink circulation device 341 is an example of a liquid circulation device in a liquid ejection head. The ink circulation devices 342 to 344 that circulate and supply ink to the ink jet heads 101 to 103 has the same configuration as the ink circulation device 341. As shown in FIG. 6, the ink circulation device 341 includes an ink tank 315, an ink pump 321, an ink filter F1, the head unit 2 of the ink jet head 100, and the ink supply path 311 and the ink discharge path 331 that connect these components. Further, the ink supply path 311 and the ink discharge path 331 are provided with air valves V1 and V2 and air filters F2 and F3, respectively. The ink level in ink tank 315 is maintained at a constant level by an ink replenishment unit (not shown).

The ink entering the upstream common liquid chamber 44 is controlled to a predetermined flow rate by the pump 321, while the ink leaving the downstream common liquid chamber 47 is controlled to a predetermined pressure determined by the liquid level in the tank 315 and the height difference of the nozzle plate 23. Therefore, the downstream ink discharge path 331 is preferably thicker than the ink supply path 311. The ink supply path 311 is, for example, a tube having a diameter of 3 mm, and the ink discharge path 331 is, for example, a tube having a diameter of 6 mm. In this case, an opening of the upstream ink port 45 has a diameter of 3 mm, and an opening of the downstream ink port 48 has a diameter of 6 mm.

During initial filling with the ink, the ink circulation device 341 first close the air valve V2 and open the air valve V1 to supply the ink from upstream by the ink pump 321. The ink flows into the head unit 2 via the upstream ink port 45, and flows through the upstream common liquid chamber 44. Then, the ink flows into the downstream common liquid chamber 47 via the pressure chambers 42 in the channels and the bypass flow path 49. The ink discharged from the downstream common liquid chamber 47 to the outside of the head fills the ink discharge channel 331. When the ink in the ink discharge channel 331 is filled to the point where it reaches valve V1, valve V1 is closed, and then valve V2 is opened. While the pump 321 is operating in this state, the ink circulates through the tank 315, pump 321, filter F1, ink supply channel 311, head 2, ink discharge channel 331, and tank 315 in this order.

The flow rate of the ink flowing through the upstream common liquid chamber 44, the flow rate of the ink flowing through the pressure chambers 42 in the channels, and the flow rate of the ink flowing through the bypass flow path 49 are set as described above. An ejection operation of the ink in the channels is performed in a state where the ink circulation flow is maintained.

Returning to the description of FIG. 3, a piezoelectric actuator 5, is disposed on one surface of the diaphragm 41 on a side opposite to the pressure chamber 42. The piezoelectric actuators 5 in the channels are arranged at positions facing the pressure chambers 42 with the diaphragm 41 interposed therebetween. The piezoelectric actuator 5 and the diaphragm 41 are bonded to each other by, for example, an adhesive. The piezoelectric actuator 5 is fixed by bonding, to a support member 7, one surface thereof opposite to the diaphragm 41 in the Z direction. In particular, as shown in FIG. 3, the piezoelectric actuator 5 is formed by alternately stacking and bonding (or laminating) a piezoelectric body 51 such as a piezoelectric element, a first internal electrode 52, and a second internal electrode 53 in layers. The piezoelectric bodies 51 are disposed such that polarization directions are opposite to each other in, for example, the Z direction, and are deformed in a d33 mode. The first internal electrode 52 and the second internal electrode 53 are conductive films formed on main surfaces of the piezoelectric body 51. The first internal electrode 52 is formed up to one end surface of the piezoelectric actuator 5 in the Y direction, and is connected to a first external electrode 54 formed on the one end surface. The second internal electrode 53 is formed up to the other end surface of the piezoelectric actuator 5 in the Y direction, and is connected to a second external electrode 55 formed on the other end surface.

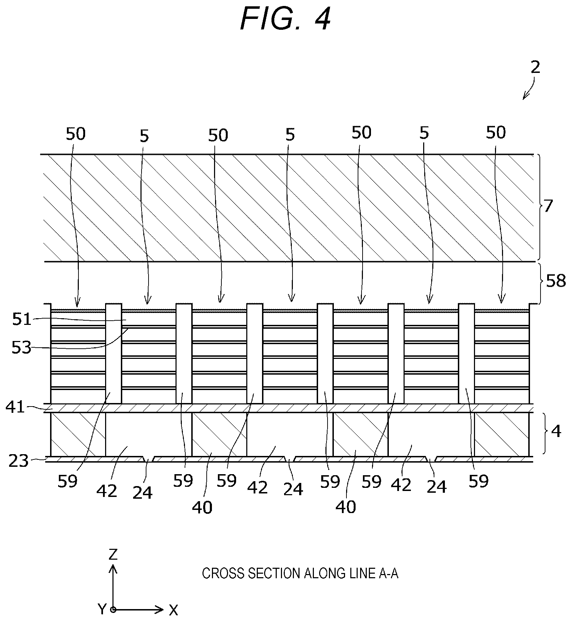

A dummy layer 58 is made of the same material as the piezoelectric body 51. The dummy layer 58 is not provided with an internal electrode and is not deformed since an electric field is not applied thereto. The dummy layer 58 serves as a base for fixing the piezoelectric actuator 5 to the support member 7 (see FIG. 4), or serves as a polishing allowance for polishing to improve accuracy during and after assembly. In particular, as shown in FIG. 4, pillars 50 may be disposed between the piezoelectric actuators 5 in the channels via grooves 59. The pillar 50 may be a dummy actuator formed in the same manner as the driving piezoelectric actuator 5. The pillar 50 is disposed at, for example, a position corresponding to a partition wall 40 between adjacent pressure chambers 42. The internal electrodes 52 and 53 between the pillars 50 are not connected to a drive element of the drive IC 3 to be described later, that is, are not driven, and thus serve as fixed portions that are not deformed. The pillar 50 may be formed of another member instead of the dummy actuator.

When the plurality of piezoelectric bodies 51 are laminated, for example, the first internal electrode 52 and the second internal electrode 53 are formed on main surfaces of the piezoelectric bodies 51 processed into a thin plate shape. Then, the piezoelectric bodies 51 are stacked and fired to be integrated to each other. Thereafter, the first external electrode 54 and the second external electrode 55 are formed. Thereafter, the piezoelectric body 51 is polarized by a polarization voltage. The piezoelectric body 51 is formed of a lead-containing piezoelectric material such as lead zirconate titanate (PZT) or a lead-free piezoelectric material such as potassium sodium niobate. The first internal electrode 52 and the second internal electrode 53 are formed of a conductive material that can be fired, such as silver palladium. The first external electrode 54 and the second external electrode 55 are formed of Ni, Cr, Au, or the like by a known method such as plating or sputtering.

The first external electrodes 54 in the channels are connected to an individual interconnect 56 of the flexible printed wiring board 21 (see FIG. 3). The flexible printed wiring board 21 includes a substrate 26, the individual interconnect 56, an adhesive layer 27, and an insulating layer 28. The flexible printed wiring board 21 is disposed such that a region where a solder plating layer 29 is formed faces the first external electrode 54, and the first external electrodes 54 in the channels and the individual interconnect 56 are electrically and mechanically connected to each other by melting a solder. Instead of the solder, the first external electrodes 54 in the channels and the individual interconnects 56 are fixed to each other by an anisotropic conductive film (ACF), an anisotropic conductive paste (ACP), a non-conductive film (NCF), a non-conductive paste (NCP), or the like, and are anisotropically connected in a thickness direction. On the other hand, the second external electrodes 55 in the channels are connected to a common interconnect (not shown) and are connected to a ground (GND) via, for example, the flexible printed wiring board 21.

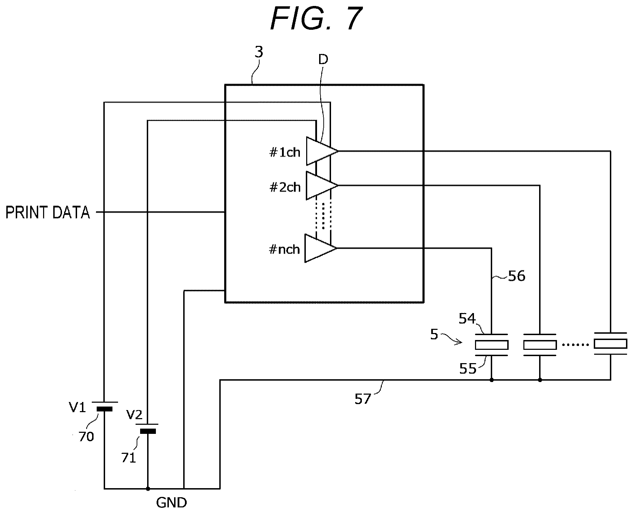

FIG. 7 shows an example of the drive circuit of the ink jet head 100. As shown in FIG. 7, the first external electrode 54 of the piezoelectric actuator 5 in each of channels (#1 ch to #n ch) is connected to the individual interconnect 56, and is connected to an output terminal of a driver D (that is, the drive element) of the drive IC 3. A connection point between the first external electrode 54 and the individual interconnect 56 is an individual terminal of the piezoelectric actuator 5. The second external electrode 55 is connected to a common interconnect 57, and is connected to a common potential. A connection point between the second external electrode 55 and the common interconnect 57 is a common terminal of the piezoelectric actuator 5.

The drive IC 3 is connected to a power supply 70 for applying a drive voltage V1 and a power supply 71 for applying a drive voltage V2 to the piezoelectric actuator 5 during ink ejection. The power supply 70 and the power supply 71 have positive electrodes connected to the drive IC 3 and negative electrodes connected to the ground (GND). The drive IC 3 is connected to a signal line of the print data transmitted from the control board 17 (see FIG. 1), which is a control unit of the ink jet printer 10. The print data is an example of a control signal. The common interconnect 57 from the common terminal of the piezoelectric actuator 5 is connected to the ground (GND).

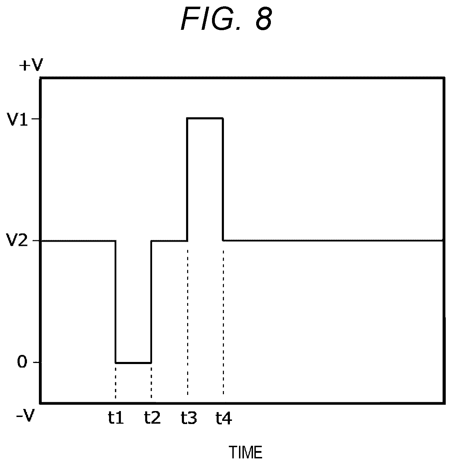

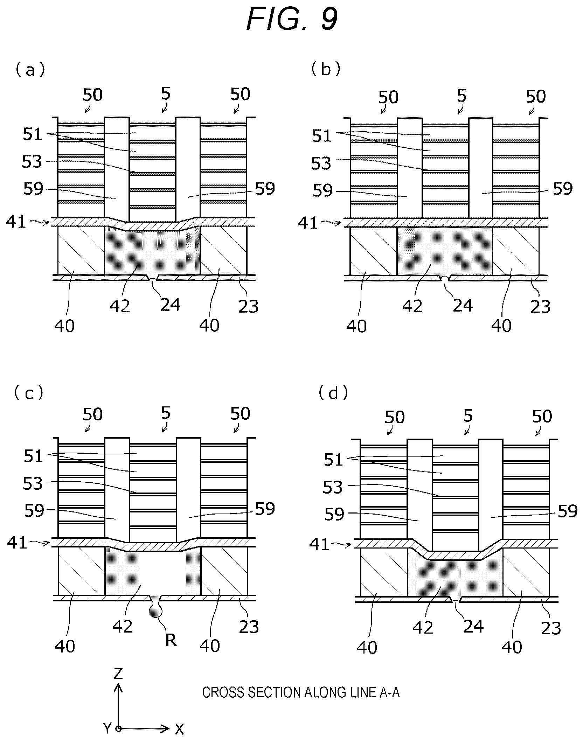

Next, an ink ejection operation will be described with reference to FIGS. 8 and 9. Each driver D of the drive IC 3 applies a drive waveform to the individual terminal of the piezoelectric actuator 5 using the drive voltages V1 and V2 and the ground (GND). The voltage V1 is, for example, 20 V. The voltage V2 is, for example, 10 V. The ground (GND) is, for example, 0 V. Which channel's piezoelectric actuator 5 is to be driven is determined based on, for example, print data. FIG. 8 is an example of the drive waveform applied to the piezoelectric actuator 5.

When the piezoelectric actuator 5 in which the common terminal is held at the ground potential to be driven, as shown in FIG. 8, the voltage V2 is applied to the individual terminal to be in a standby state. When the voltage V2 is applied, an electric field is applied in a direction of a polarization axis of the piezoelectric body 51, and as shown in (a) in FIG. 9, due to an inverse piezoelectric effect of the piezoelectric element, the piezoelectric actuator 5 extends in a lamination direction (i.e., Z direction) and a volume of the pressure chamber 42 is reduced. The above is performed prior to an ink ejection timing. Thereafter, a potential of the individual terminal is first lowered to the ground (GND) at the ink ejection timing (time t1 in FIG. 8), whereby the extended piezoelectric actuator 5 returns to an original state, that is, relatively contracts, and the volume of the pressure chamber 42 relatively expands, as shown in (b) in FIG. 9. When the volume of the pressure chamber 42 expands, a meniscus on a boundary surface between the ink in the nozzles 24 and outside air is drawn in a concave shape toward the pressure chamber 42.

Then, for example, when the voltage V2 is applied to the individual terminal at a time t2 in FIG. 8 after 1/2 of a pressure vibration cycle of the head unit 2 elapses, as shown in (c) in FIG. 9, the piezoelectric actuator 5 extends in the lamination direction (i.e., Z direction) and the volume of the pressure chamber 42 is relatively reduced, whereby droplets R of ink are ejected from the nozzle 24. Then, for example, after 1/2 of the pressure vibration cycle of the head unit 2 elapses, the voltage V1 is applied to the individual terminal at a time t3 in FIG. 8, and is returned to the voltage V2 at a time t4 after a predetermined time elapses. The volume of the pressure chamber 42 is reduced and restored by the expansion ((d) in FIG. 9) and restoration ((a) in FIG. 9) of the piezoelectric actuator 5 at this time, and a residual vibration due to this operation is attenuated. In this manner, the volume of the pressure chamber 42 changes in accordance with a longitudinal vibration of the piezoelectric actuator 5 in the lamination direction, and the ink can be ejected. When a series of ejection of the ink is completed, since the volume of the ink in the pressure chamber 42 is reduced by an amount of the ejection, the ink flows into the pressure chambers 42 via the upstream resistance flow paths 43. At this time, when the flow rate of the ink supplied from upstream of the pressure chamber is small, the ink is also drawn into the pressure chamber 42 from downstream via the downstream resistance flow paths 46.

### Second Embodiment

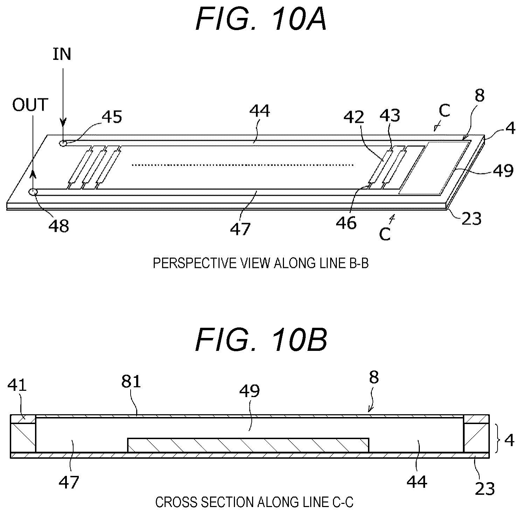

Next, the ink jet head 100 according to a second embodiment will be described. As shown in FIGS. 10A and 10B, the ink jet head 100 according to the second embodiment has the same configuration as the ink jet head 100 according to the first embodiment except that a pressure damper 8 is provided in the bypass flow path 49.

As shown in FIGS. 10A and 10B, the pressure damper 8 is formed by making an opening in one surface of the bypass flow path 49 opposite to the nozzle plate 23 in a Z direction and sealing the opening with a soft material 81 such as a thin polyimide film. The soft material 81 such as the polyimide film is an example of a flexible resin that covers an opening portion of the bypass flow path 49. The pressure damper 8 is an example of a membrane damper. When an ejection amount of ink is rapidly changed, the soft material 81 is bent, and a rapid pressure change in the upstream common liquid chamber 44 and the downstream common liquid chamber 47 can be alleviated.

That is, in particular, in a multi-nozzle head having a plurality of channels for ejecting ink, a flow rate of the ejected ink may rapidly change depending on a print content. For example, when a line drawing pattern with many blanks is to be printed continuously from a state where all channels perform printing at a full duty, the flow rate of the ink rapidly decreases, and conversely, for a pattern in which printing starts from a blank at a full duty, the flow rate of the ink rapidly increases. When there is such a sudden change in flow rate of the ink, the ink having a mass needs to be suddenly stopped or suddenly started, and thus a back pressure of the ink to be ejected changes. The change in back pressure influences a behavior of the ink to be ejected, and causes deterioration in printing quality.

Although the pressure damper may be provided as a unit for absorbing the change in back pressure of the ink, it is difficult to provide the pressure damper with a simple structure since the ink circulation type ink jet head 100 has many flow paths. Therefore, when the pressure damper 8 is provided in the bypass flow path 49 as in the present embodiment, a damper effect can be commonly applied to both the upstream common liquid chamber 44 and the downstream common liquid chamber 47. Therefore, only one pressure damper 8 is required. The membrane type pressure damper 8 functions more efficiently as the pressure damper 8 is thinner and has a larger area. Therefore, the pressure change can be absorbed more efficiently with a smaller area by using the pressure damper 8 common for upstream and downstream than by providing pressure dampers individually for upstream and downstream. Further, since the pressure damper 8 is in the bypass flow path 49, it is also advantageous for easy filling with the ink. In order to enhance the damper effect of the pressure damper 8, an area of the soft material 81 can be increased by forming the bypass flow path 49 into a flatter shape by adjusting the widths in the Z direction and the X direction. However, a location where the soft material 81 is disposed is not limited to the opening in the Z direction.

The flow rate of the ink flowing through the bypass flow path 49 provided with the pressure damper 8 is, for example, equal to or greater than a total circulation flow rate of the ink flowing through the pressure chambers 42. That is, in order to cause the pressure damper 8 to effectively function, a dimension (i.e., a flow path cross-sectional area and a flow path length) of the bypass flow path 49 is designed such that a flow path resistance of the bypass flow path 49 is equal to or less than a parallel flow path resistance of all flow paths of the pressure chambers 42. The flow path resistance of all the flow paths of the pressure chambers 42 is flow path resistances of a plurality of flow paths from inlets of the upstream resistance flow paths 43 to outlets of the downstream resistance flow paths 46. The parallel flow path resistance is a composite of flow path resistances of all parallel channels. In order to prevent the ink from flowing backward from downstream ahead of the downstream ink port 48, similar to the first embodiment, it is desirable that the total flow rate of the ink flowing through all of the flow paths of the pressure chamber 42 and the bypass flow path 49 is equal to or greater than a maximum total flow rate of the ink ejected from the nozzles 24.

As shown in FIGS. 11A to 11C, pressure dampers 82 and 83 may also be provided near the upstream ink port 45 and the downstream ink port 48. In this case, the pressure dampers 82 and 83 are individually disposed upstream and downstream. Similar to the pressure damper 8, the pressure dampers 82 and 83 are formed by opening one surface opposite to the nozzle plate 23 in the Z direction and sealing the opening with the soft material 81 such as a thin polyimide film. In this manner, by providing the pressure dampers 8, 82, and 83 at both ends of the upstream common liquid chamber 44 and the downstream common liquid chamber 47, respectively, an effect of absorbing the pressure change is enhanced.

### Third Embodiment

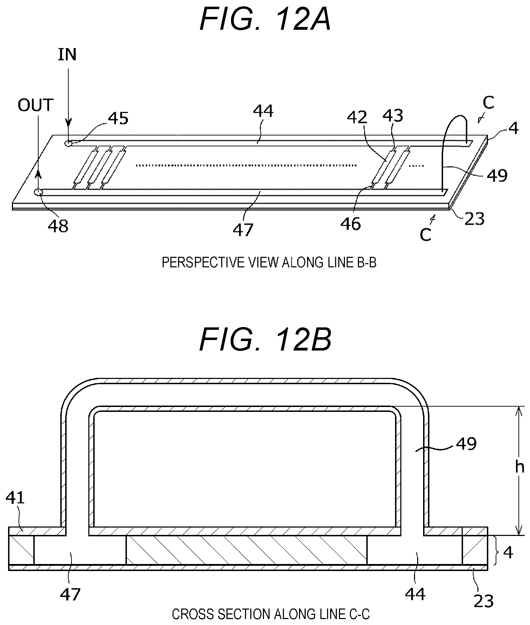

Next, the ink jet head 100 according to a third embodiment will be described. As shown in FIGS. 12A and 12B, the ink jet head 100 according to the third embodiment has the same configuration as the ink jet head 100 according to the first embodiment except that the bypass flow path 49 is formed in a tube shape.

As shown in FIGS. 12A and 12B, the bypass flow path 49 having a tube shape is disposed in an inverted U shape in a Z direction. When the bypass flow path 49 is formed in a tube shape and has a maximum height h in the Z direction, it is possible to select whether to allow ink to pass through the bypass flow path 49 by adjusting, for example, a pressure of the ink supplied by the ink pump 321 during filling with the ink after a state where air remains in the head unit 2. That is, a highest point of the bypass flow path 49 is higher than a height of the upstream common liquid chamber 44. For example, when the ink flows from the upstream ink port 45 to the downstream ink port 48 while maintaining a state where a pressure difference is smaller than ρgh, the ink does not flow through the bypass flow path 49 since the ink does not exceed the maximum height h. Note that, ρ is a density of the ink, and g is gravitational acceleration. In this state, the pressure chambers 42 are filled with the ink, and then the ink is further circulated with an upstream and downstream pressure difference set to ρgh or more, so that the bypass flow path 49 can also be filled with the ink. The highest point of the bypass flow path 49 is desirably higher than a maximum height of the ink supply path 311 in FIG. 6.

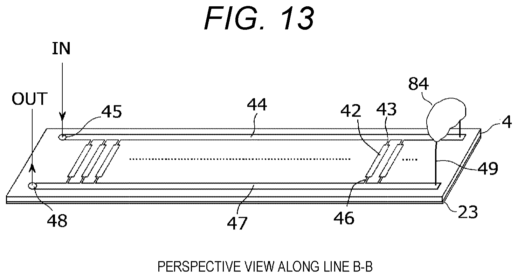

The bypass flow path 49 having a tube shape may be a soft tube such as a flexible tube. The soft tubes also function as dampers to absorb sudden changes in pressure. Further, as shown in FIG. 13, a pressure damper 84 such as a flexible bag may be provided in the bypass flow path 49 having a tube shape. Since the flexible bag easily takes up a large surface, a high damper effect can be obtained.

As described above, according to any of the above-described embodiments, it is possible to provide the ink jet head 100 capable of stably ejecting a liquid in the liquid circulation type by providing the bypass flow path 49 connecting the upstream common liquid chamber 44 and the downstream common liquid chamber 47 on the other end side in the arrangement direction of the plurality of pressure chambers 42.

Increasing the circulation flow rate of the ink in the entire head unit 2 by providing the bypass flow path 49 has an advantage that the ink easily transfers heat to the head unit 2 and a temperature of the head unit 2 can be brought close to a temperature of the ink. In addition, in order to increase the circulation flow rate of the ink in the entire head unit 2 by providing the bypass flow path 49, it is possible to stir the ink by increasing the circulation flow rate, and there is also an effect of preventing sedimentation of sedimentary ink containing, for example, silica.

The piezoelectric actuator 5 is not limited to a laminated type in which a plurality of piezoelectric bodies 51 are laminated. The piezoelectric actuator 5 may be a piezoelectric actuator having a single layer. The operation of the actuator when the drive voltage is applied is not limited to the longitudinal vibration. Further, the embodiment is not limited to a drop-on-demand piezoelectric method, and may be applied to a continuous method.

In the above-described embodiments, the ink jet head 100 of the ink jet printer 10 is described as an example of a liquid ejection device, but the liquid ejection device may be a shaping material ejection head of a 3D printer or a sample ejection head of a dispensing device.

The embodiments have been presented by way of example and are not intended to limit the scope of the exemplary embodiments. These novel embodiments can be implemented in various other forms, and various omissions, substitutions, and modifications can be made without departing from the gist of the exemplary embodiments. These embodiments and modifications thereof are included in the scope and the gist of the exemplary embodiments, and are included in a scope of the exemplary embodiments disclosed in the claims and equivalents thereof.

## Claims

1. A liquid ejection head comprising:
a plurality of pressure chambers (42) arranged in a first direction and respectively communicating with nozzles, each pressure chamber capable of storing liquid;
a plurality of pairs of upstream and downstream flow paths (43, 46), each pair communicating with a corresponding one of the pressure chambers, the upstream flow path of each pair being connected to a first end of the corresponding pressure chamber, and the downstream flow path of said each pair being connected to a second end of the corresponding pressure chamber;
an upstream common chamber (44) communicating with the upstream flow paths;
an upstream port (45) communicating with the upstream common chamber at a first end of the upstream common chamber in the first direction;
a downstream common chamber (47) communicating with the downstream flow paths;
a downstream port (48) communicating with the downstream common chamber at a first end of the downstream common chamber in the first direction;
a bypass flow path communicating with the upstream common chamber at a second end of the upstream common chamber in the first direction and the downstream common chamber at a second end of the downstream common chamber in the first direction; and
a pressure damper provided in the bypass flow path.

2. The liquid ejection head according to claim 1, wherein
a flow path resistance of the bypass flow path is less than or equal to a parallel flow path resistance of flow paths extending from inlets of the upstream flow paths to outlets of the downstream flow paths.

3. The liquid ejection head according to claim 1 or 2, wherein
the pressure damper is a membrane damper formed of a flexible resin.

4. The liquid ejection head according to claim 3, wherein
the pressure damper forms a surface of the bypass flow path.

5. The liquid ejection head according to any one of claims 1 to 4, wherein
the pressure damper is a flexible bag provided in the middle of the bypass flow path.

6. The liquid ejection head according to any one of claims 1 to 4, wherein
the pressure damper is formed of a flexible tube in which the bypass flow path passes.

7. The liquid ejection head according to any one of claims 1 to 6, wherein
a top of the bypass flow path is located higher than a top of the upstream common chamber in a second direction perpendicular to the first direction.

8. The liquid ejection head according to any one of claims 1 to 7, wherein
each of the nozzles is disposed at a location between the first and second ends of the corresponding pressure chamber.

9. The liquid ejection head according to any one of claims 1 to 8, further comprising:
a plurality of piezoelectric bodies disposed corresponding to each of the pressure chambers in a second direction perpendicular to the first direction.

10. The liquid ejection head according to claim 9, wherein
one of the nozzles, the corresponding pressure chamber, and the corresponding piezoelectric bodies are arranged in the second direction in this order.

11. A liquid ejection device comprising:
a tank for storing liquid;
a pump for transferring the liquid from the tank;
a liquid supply path through which the liquid is supplied from the pump; and
a liquid ejection head according to any one of claims 1 to 10, the liquid ejection head being connected to the liquid supply path and configured to eject the liquid.

12. The liquid ejection device according to claim 11, further comprising:
a filter in the bypass flow path.

13. The liquid ejection device according to claim 11 or 12, wherein
the bypass flow path communicates with the upstream port and supplies a particular amount of the liquid to the upstream port.

14. The liquid ejection device according to any one of claims 11 to 13, wherein
a pressure applied to the downstream port is controlled to be a particular value.

15. An image forming apparatus comprising:
an ink jet head comprising a liquid ejection head according to any one of claims 1 to 10; and
a control board configured to control the ink jet head.
